Europäisches Patentamt

European Patent Office

Office européen des brevets

(19)

(11) **EP 1 255 344 A1**

(12) # EUROPEAN PATENT APPLICATION

(43) Date of publication:
**06.11.2002 Bulletin 2002/45**

(51) Int Cl.[7]: **H02K 3/18**, H02K 1/14

(21) Application number: **01110703.4**

(22) Date of filing: **02.05.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **HSU, CHUN-PU
TAIPEI HSIEN; TAIWAN, R.O.C. (TW)**

(72) Inventor: **HSU, CHUN-PU
TAIPEI HSIEN; TAIWAN, R.O.C. (TW)**

(74) Representative:
**Schnekenbühl, Robert Matthias L.
DTS München Patent-
und Rechtsanwälte
St.-Anna-Strasse 15
80538 München (DE)**

(54) **A device with a stator having high performance flat coils**

(57)     A device with a stator having high performance flat coils is disclosed for increasing the operation efficiency and providing a correct number of winding in a coil which can cause a precise control of the inverse electromotive constant $K_E$ of a motor or a generator so that a motor or a generator with a fixed volume can be designed to have a high rotary speed. The flat coil can be wound with a high volume occupying ratio so that the cross section of a flat coil is larger than that of the round coil so as to reduce the copper wire resistance. Therefore, the motor or generator using the flat coil has a higher operation efficiency and has a higher rated highest operation speed.

Fig. 3A

## Description

### *FIELD OF THE INVENTION*

The present invention relates to a device with a stator having high performance flat coils, thereby the coils of a motor or a generator, wire groove seat, and stator tooth portion are separated from the stator portion. The flat wires are used to replace the round wire. There are only one layer of flat wires which is shaped in a shaping machine in advance. Therefore, the thickness of the flat material can be adjusted so as to control the number of winding accurately and therefore, a motor or a generator with a fixed volume may adjust the number of coil accurately so as to be acquire a precise inverse electrodynamic force constant $K_E$. Namely, the working rotary speed range is controlled accurately. The number of coil may be presented by the following formula: $E = \Omega \cdot D \cdot B \cdot L \cdot Z/2 = Q \cdot K_E$ where E is the voltage of a power source, $\Omega$ is the rotary speed of an armature, D is an outer diameter of an armature, B is magnetic flux density of air gap, L is stacking thickness, Z is the total conductor number and $K_E$ is an inverse electromagnetic force constant.

### *BACKGROUND OF THE INVENTION*

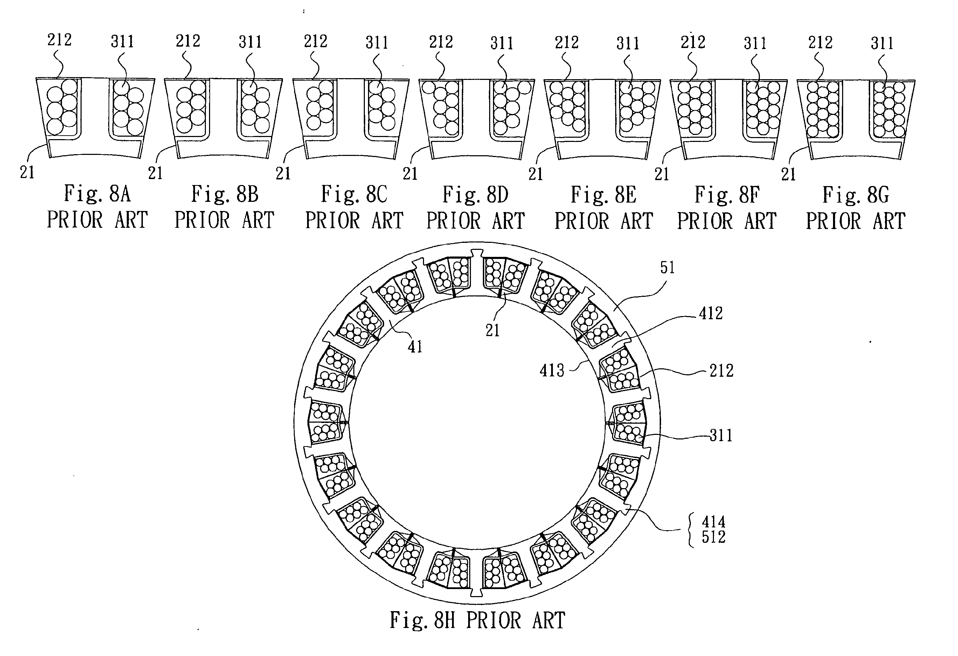

A high performance motor or generator must be in an optimum work point for acquiring highest working efficiency. Therefore, the range of the rotary speed must be held accuracy. Since $E = \Omega \cdot D \cdot B \cdot L \cdot Z/2 = \Omega \cdot K_E$. Therefore, it is appreciated that the inverse electromotive constant $K_E$ is inversely proportionally to the rotary speed of armature. Sine $K_E = D \cdot B \cdot L \cdot Z/2$. Thus, it is known that the inverse electromotive constant $K_E$ is related to the outer diameter D of the armature, air gap magnetic flux density B, stacking thickness L, and the total conductor number Z. If the outer diameter D of the armature, air gap magnetic flux density B, stacking thickness L are constants, it is only necessary to change the total conductor number Z, than rated highest rotary speed can be changed, as illustrated in Fig. 8.

Referring to Figs. 8A to 8C, due to the diameters of the coils, only six winds are formed in Figs. 8A, 8B, and 8C. Eight winds are formed in Fig. 8D. Ten winds are formed in Fig. 8E. 12 winds are formed in Fig. 8F. 14 winds are formed in Fig. 8G. Therefore, it is difficult to have 7, 9, 11, and 13 winds if necessary in operating point. Meanwhile, due to above figures, gaps are formed between the wires so that the coils are not efficient to occupy a space. Therefore, the cross sectional view of the coil will be reduced. Furthermore, the copper wire impedance of the coils increases and the copper wire power consumption increase.

$$P = I^2 \cdot R$$

Where P = power consumption of copper wire of coil

    I = current of copper wire of coil
    R = copper wire impedance of the coil

The copper wire impedance is proportional to the working temperature due to physics property. If the working temperature is increased, then impedance will increase positively proportionally. Therefore, the volume occupy ratio of the coil in the wire groove is helpful to the reduction of impedance of copper wire. Abovesaid is important for the high operation performance motor.

### *SUMMARY OF THE INVENTION*

Since in the prior art, the winding wires have different cross sections and arranged many layers so that the volume occupying ratio in the same groove seat is different from one to one, moreover, in the same groove seat, various number of windings can not be achieved by arranging various round wires as to generate a large trouble in designing a motor or a generator to work in a working range.

The number of coil may be presented by the following formula: $E = \Omega \cdot D \cdot B \cdot L \cdot Z/2 = \Omega \cdot K_E$ where E is the voltage of a power source, $\Omega$ is the rotary speed of an armature, D is an outer diameter of an armature, B is magnetic flux density of air gap, L is stacking thickness, Z is the total conductor number and $K_E$ is an inverse electromagnetic force constant. In that the $K_E$, an inverse electromagnetic force constant, is inversely proportional to $\Omega$, and proportional to the D, B, L, and Z. Therefore, when a motor or a generator with the same size is designed to be used in different working range. In that, the change of the number N of the coil will inversely proportional to the inverse electromagnetic force constant $K_E$.

According to above reason and the device with a stator having high performance flat coils of the present invention, the inverse electromagnetic force constant $K_E$ and the number of coil in various windings can be controlled precisely. Furthermore, various wires have gaps in arrangement. Therefore, the volume occupying ratio is higher.

The various objects and advantages of the present invention will be more readily understood from the following detailed description when read in conjunction with the appended drawing.

### *BRIEF DESCRIPTION OF THE DRAWINGS*

Fig. 1A to 1C are a schematic views showing the outer stator groove seat and flat wire with various thickness and number of windings in the first embodiment of the present invention.

Fig. 2A to 2C is a perspective views of the groove seat and flat wire of the first embodiment Fig. 1.

Fig. 3A to 3C are a schematic views showing the outer stator tooth portion, wire groove seat, flat coil, insulating pieces of the first embodiment in the present invention.

Fig. 4A to 4C are a schematic views showing the outer stator tooth portion, wire groove seat, flat coil, insulating pieces of the second embodiment in the present invention.

Fig. 5 is a schematic view showing the outer stator tooth portion, wire groove seat, flat coil, insulating pieces of the third embodiment in the present invention.

Fig. 6 is a schematic view showing the outer stator tooth portion, wire groove seat, flat coil, insulating pieces of the fourth embodiment in the present invention.

Fig. 7A to 7B are the assembled cross sectional views of the outer stator and inner stator according to the present invention.

Fig. 8A to 8G are schematic views showing that the prior art round wires placed in the wire groove seat, and showing the volume occupying ratio and number of windings.

Fig. 8H is an assembled cross sectional view of an outer stator portion of a prior art round coil.

### *DETAILED DESCRIPTION OF THE PREFERRED EMBODIMENTS*

To more understand the present invention by those skilled in the art, in the following, the details will be described with the appended drawings. However, all these descriptions are used to make one fully understand the present invention, while not to used to confine the scope of the present invention defined in the appended claims.

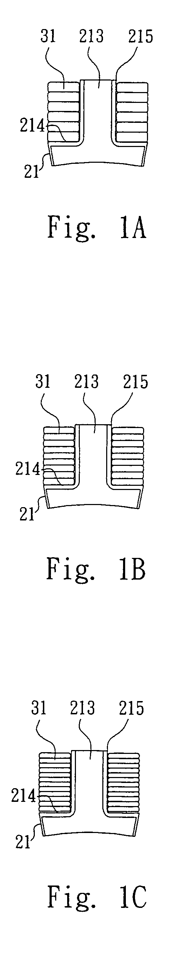

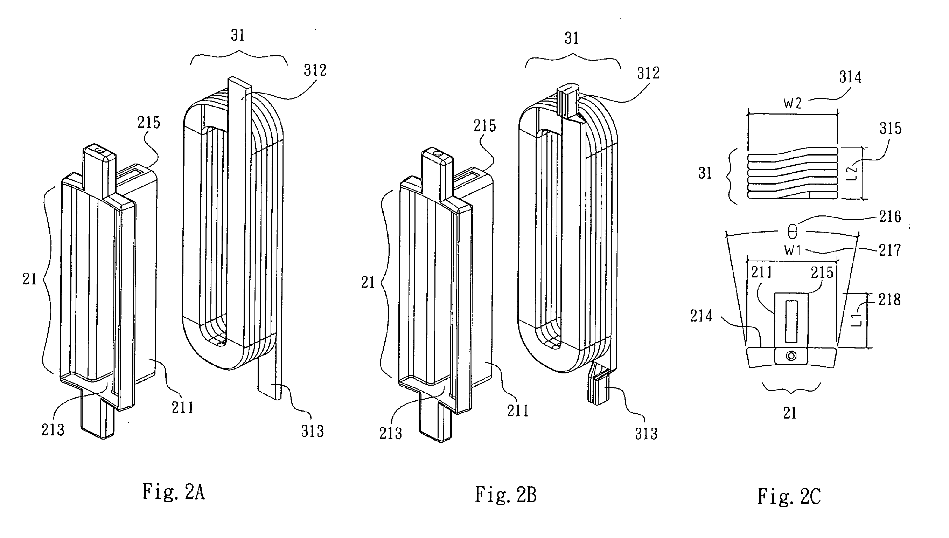

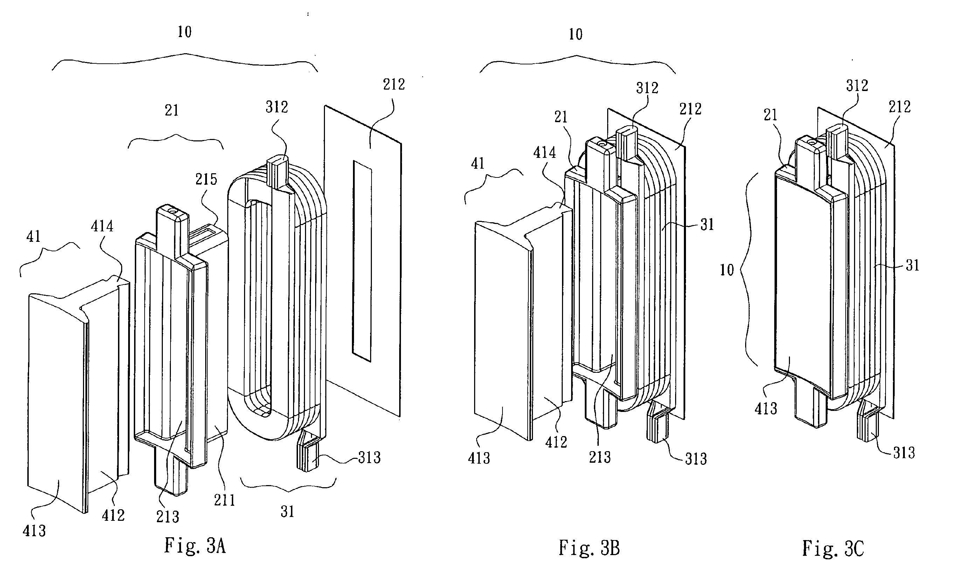

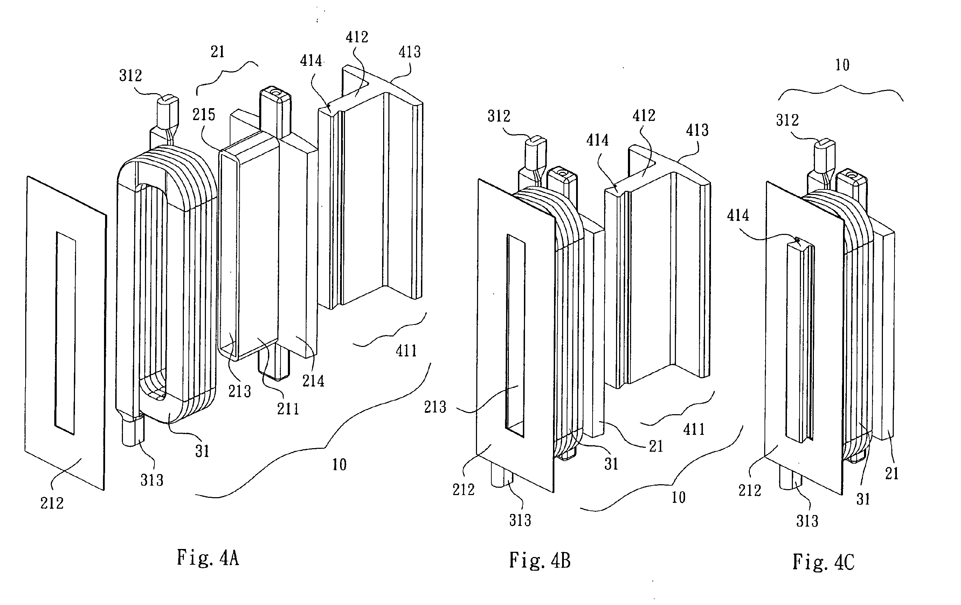

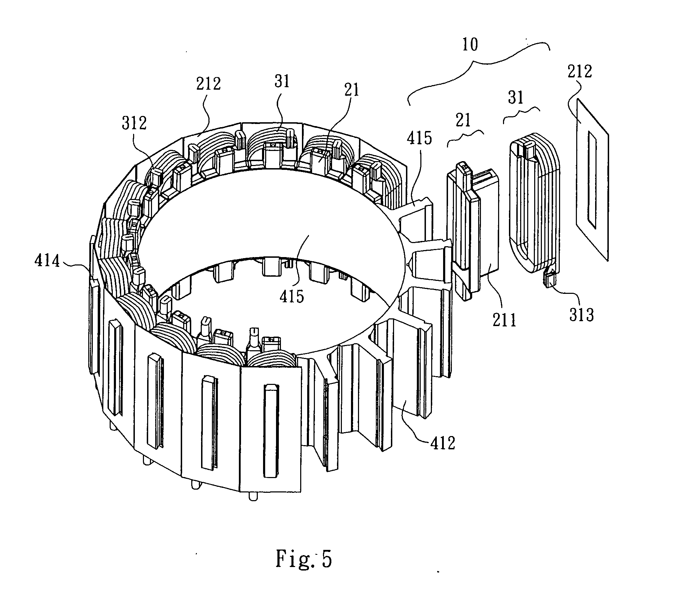

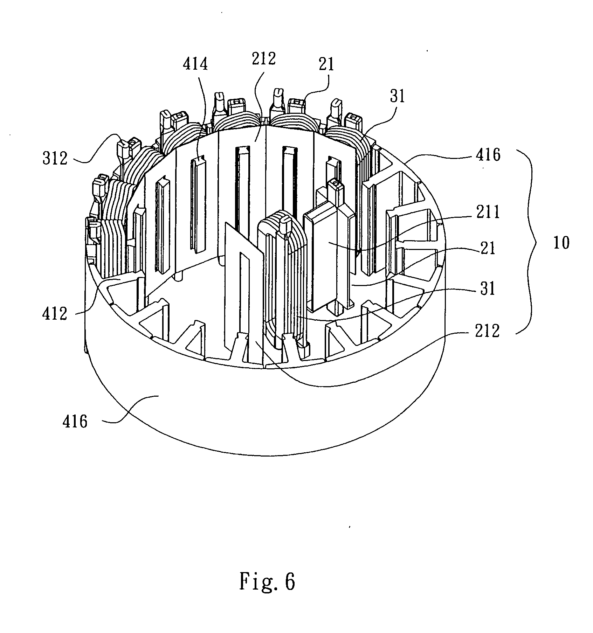

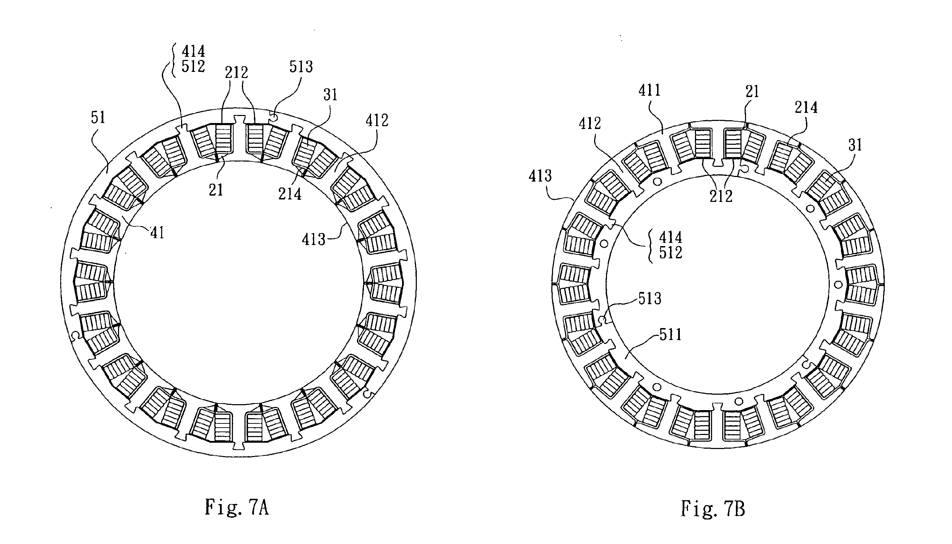

Referring to Figs. 1 to 7, the device with a stator having high performance flat coils 10 of the present invention includes stator 41, 411 which are punched by silicon steel piece. Since the tooth face 413 has a cambered surface, an tooth root end extends backwards from the center of the cambered surface. The distal end of the tooth root end is extended outwards with a tooth root distal end 414 which is not larger than the maximum width of the tooth root end 412.

The T shape wire groove seat 21 is made by insulator and has a T shape. The longitudinal vertical post 211 thereof provides to be engaged with the coils of the motor or generator. The interior of the longitudinal vertical post 211 is hollow and is engagable with the stator tooth root end 412. The hollow portion is a hollow end 213 of the wire groove seat. The T shape wire groove seat 21 is formed with an inner side 214 and a bottom side 215 of a wire groove seat vertical post. The T shape wire groove seat 21 is further formed with a plurality of different angles 216 of the groove.

The flat coil 31 is a flat wire. Two ends thereof are installed with a flat coil head 312 and a flat coil tail 313. The thickness of the flat wire is determined by the depth 218 of the longitudinal vertical post of the T shape wire groove seat divided by the number of winds of a rated rotary speed Ω so as to acquire a thickness dividing number. The thickness 315 of the flat wire should be smaller than the thickness dividing number so as to assure that the total thickness of the flat coil after winding is slightly smaller than the depth 218 of the longitudinal vertical post of the T shape wire groove seat. The width 314 of the flat coil is slightly smaller than the width 217 of the winding space of the T shape wire groove seat.

The abovesaid flat wire can be used in a standing form and is used with a "winding machine" for winding with a layer or multiple layer of windings. The shaped flat coil 31 is further engaged with the longitudinal vertical post 211 of the T shape wire groove seat 21. Moreover, the distal end of the flat coil 31 is installed with an insulating piece 212.

The stator tooth portion is the single outer stator tooth portion 41 of a motor or a generator, or the single inner stator tooth portion 411 of a motor or a generator, or an integral closed and inseparable outer stator tooth portion 415, or an integral closed and inseparable inner stator tooth portion 416. The coil is the exciting coil of a motor or the induced coil in a generator.

The outer state ring portion 51 and inner stator ring portion 511 can be decomposed into a plurality of equal units. The right and left ends of each unit are adjacent to the right and left ends of each unit. They are engaged by corresponding inseparable embedded ends 513, while the orientation in engagement can not be adjusted so as to be formed with complete stator ring portion 51 and 511. The inner or outer rings of the stator ring portions 51 and 511 are installed with a plurality of inlaying grooves 512. The tooth root distal end 414 has a shape correspondent to the inlaying groove 512 of the stator ring portions 51, 511. The two are combined tightly.

Although the present invention has been described with reference to the preferred embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims.

### Claims

1. A device with a stator having high performance flat coils comprising:

a stator tooth portion being punched by silicon steel pieces and having a tooth face having a cambered surface, an tooth root end extending backwards from a center of the cambered surface; a distal end of the tooth root end being extended outwards with a tooth root distal end which is not larger than a maximum width of the tooth root end;

a T shape wire groove seat being made by insulator and having a T shape; a longitudinal vertical post thereof providing to be engaged with the coils of a motor or a generator; an interior of the longitudinal vertical post being hollow and being engagable with the stator tooth root end; and the hollow portion being a hollow end of the wire groove seat; and

a flat coil being a flat wire; a thickness of the flat wire being determined by a depth of the longitudinal vertical post of the T shape wire groove seat divided by the number of winds of a rated rotary speed so as to acquire a thickness dividing number; a thickness of the flat wire should be smaller than a thickness dividing number so as to assure that a total thickness of the flat coil after winding is slightly smaller than the depth of the longitudinal vertical post of the T shape wire groove seat; the width of the flat coil being slightly smaller than a width of the winding space of the T shape wire groove seat; the flat wire being used in a standing form and being used with a "winding machine" for winding with a layer or multiple layer of windings; the shaped flat coil being further engaged with the longitudinal vertical post of the T shape wire groove seat; and moreover, a distal end of the flat coil being installed with an insulating piece.

2. The device with a stator having high performance flat coils as claimed in claim 1, wherein the stator tooth portion is a single outer stator tooth portion of a motor or a generator.

3. The device with a stator having high performance flat coils as claimed in claim 1, wherein the stator tooth portion is a single inner stator tooth portion of a motor or a generator.

4. The device with a stator having high performance flat coils as claimed in claim 1, wherein the stator tooth portion is an integral closed and inseparable outer stator tooth portion.

5. The device with a stator having high performance flat coils as claimed in claim 1, wherein the stator tooth portion is an integral closed and inseparable inner stator tooth portion.

6. The device with a stator having high performance flat coils as claimed in claim 1, wherein the flat coil is the exciting coil of a motor.

7. The device with a stator having high performance flat coils as claimed in claim 1, wherein the flat coil is the exciting coil of an induced coil in a generator.

Fig. 1A

Fig. 1B

Fig. 1C

Fig. 2A

Fig. 2B

Fig. 2C

Fig. 3A

Fig. 3B

Fig. 3C

Fig. 4A

Fig. 4B

Fig. 4C

Fig. 5

EP 1 255 344 A1

Fig. 6

Fig. 7A

Fig. 7B

Fig. 8A PRIOR ART

212  311

21

Fig. 8B PRIOR ART

212  311

21

Fig. 8C PRIOR ART

212  311

21

Fig. 8D PRIOR ART

212  311

21

Fig. 8E PRIOR ART

212  311

21

Fig. 8F PRIOR ART

212  311

21

Fig. 8G PRIOR ART

212  311

21

Fig. 8H PRIOR ART

41

21

413

51

414
512

311

212

412

European Patent Office

**EUROPEAN SEARCH REPORT**

Application Number

EP 01 11 0703

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | PATENT ABSTRACTS OF JAPAN vol. 008, no. 070 (E-235), 3 April 1984 (1984-04-03) & JP 58 218846 A (HITACHI SEISAKUSHO KK), 20 December 1983 (1983-12-20) * abstract; figures 1,2 * | 1-7 | H02K3/18 H02K1/14 |
| Y | US 4 906 883 A (HERZOG GORDON W) 6 March 1990 (1990-03-06) * abstract; figure 1 * | 1-7 | |
| Y | US 4 312 387 A (FINEGOLD HYMAN B) 26 January 1982 (1982-01-26) * column 6, line 58 - line 65 * * column 7, line 6 - line 9 * * column 7, line 56 - line 58 * * column 8, line 51 - line 57; figures 2,7,9 * | 1,2,6 | |
| Y | US 4 712 035 A (FORBES FRANKLIN L ET AL) 8 December 1987 (1987-12-08) * abstract; figures 1,5 * | 3,6 | TECHNICAL FIELDS SEARCHED (Int.Cl.7) H02K |
| Y | US 2 607 816 A (RYDER FRANK A ET AL) 19 August 1952 (1952-08-19) * column 4, line 47 - line 74; figures 4-7 * | 4,6 | |
| Y | US 6 081 059 A (HSU CHUN-PU) 27 June 2000 (2000-06-27) * abstract; figures 2,3 * | 5,6 | |
| Y | US 2 251 152 A (MORTENSEN SOREN H) 29 July 1941 (1941-07-29) * column 2, line 21 - line 26; figures 1,2 * | 7 | |

The present search report has been drawn up for all claims

| Place of search | Date of completion of the search | Examiner |
|---|---|---|
| MUNICH | 16 October 2001 | Flyng, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 01 11 0703

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2001

| Patent document cited in search report | | Publication date | Patent family member(s) | | Publication date |
|---|---|---|---|---|---|
| JP 58218846 | A | 20-12-1983 | JP | 1335715 C | 11-09-1986 |
| | | | JP | 61000778 B | 10-01-1986 |
| US 4906883 | A | 06-03-1990 | CA | 1290379 A1 | 08-10-1991 |
| US 4312387 | A | 26-01-1982 | US | 4131988 A | 02-01-1979 |
| | | | CA | 1121580 A1 | 13-04-1982 |
| | | | CA | 1152300 A2 | 23-08-1983 |
| | | | CA | 1177870 A2 | 13-11-1984 |
| | | | DE | 2746351 A1 | 03-05-1978 |
| | | | ES | 463220 A1 | 01-07-1978 |
| | | | FR | 2369717 A1 | 26-05-1978 |
| | | | GB | 1596182 A | 19-08-1981 |
| | | | GB | 1596181 A | 19-08-1981 |
| | | | IT | 1087592 B | 04-06-1985 |
| | | | JP | 1454729 C | 25-08-1988 |
| | | | JP | 53055703 A | 20-05-1978 |
| | | | JP | 62058235 B | 04-12-1987 |
| | | | JP | 1769749 C | 30-06-1993 |
| | | | JP | 4049336 B | 11-08-1992 |
| | | | JP | 61112540 A | 30-05-1986 |
| | | | US | 4446393 A | 01-05-1984 |
| US 4712035 | A | 08-12-1987 | CA | 1330882 A1 | 26-07-1994 |
| | | | AU | 603346 B2 | 15-11-1990 |
| | | | AU | 6509486 A | 14-05-1987 |
| | | | AU | 640987 B2 | 09-09-1993 |
| | | | AU | 7081791 A | 23-05-1991 |
| | | | CA | 1323650 A1 | 26-10-1993 |
| | | | CA | 1333007 A1 | 15-11-1994 |
| | | | DE | 3638228 A1 | 27-05-1987 |
| | | | FR | 2595019 A1 | 28-08-1987 |
| | | | FR | 2607158 A1 | 27-05-1988 |
| | | | FR | 2607157 A1 | 27-05-1988 |
| | | | FR | 2607157 B1 | 03-08-1990 |
| | | | FR | 2739633 A1 | 11-04-1997 |
| | | | GB | 2183932 A ,B | 10-06-1987 |
| | | | GB | 2220681 A ,B | 17-01-1990 |
| | | | IT | 1197975 B | 21-12-1988 |
| | | | JP | 62114456 A | 26-05-1987 |
| | | | MX | 174576 B | 27-05-1994 |
| | | | MX | 9206924 A1 | 30-06-1994 |
| | | | NZ | 218135 A | 28-10-1992 |
| | | | NZ | 232671 A | 28-10-1992 |
| | | | US | 4835839 A | 06-06-1989 |
| | | | US | 5918360 A | 06-07-1999 |

For more details about this annex : see Official Journal of the European Patent Office, No. 12/82

EPO FORM P0459

14

**EP 1 255 344 A1**

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2001

| Patent document cited in search report | | Publication date | Patent family member(s) | | Publication date |
|---|---|---|---|---|---|
| US 4712035 | A | | US | 5619871 A | 15-04-1997 |
| US 2607816 | A | 19-08-1952 | NONE | | |
| US 6081059 | A | 27-06-2000 | NONE | | |
| US 2251152 | A | 29-07-1941 | NONE | | |

EPO FORM P0459

For more details about this annex : see Official Journal of the European Patent Office, No. 12/82